# EUROPÄISCHE PATENTSCHRIFT

(11) **EP 0 579 085 B1**
(45) Veröffentlichungstag und Bekanntmachung des Hinweises auf die Patenterteilung: **26.03.1997**
(21) Anmeldenummer: 93110751.0
(22) Anmeldetag: 06.07.1993
(51) Int. Cl.: G01N 1/28, F27B 17/02, G01N 21/74

(54) **Rohrofen mit darin arretiertem Probenträger für die elektrothermische Atomisierung**
Tubular furnace with sample carrier with positive location means for electrothermal atomisation
Four tubulaire avec support d'échantillon bloquable pour atomisation électrothermale

(30) Priorität: 17.07.1992 DE 4223593
(43) Veröffentlichungstag der Anmeldung: 19.01.1994
(73) Patentinhaber: SGL CARBON AG, D-65203 Wiesbaden (DE)
(72) Erfinder: Hütsch, Bruno, B-4782 St. Vith (BE); Schmidt, Bernd, D-53177 Bonn (DE)

(56) Entgegenhaltungen:
- EP-A- 0 442 009
- DE-A- 3 722 379
- DE-U- 8 714 926
- DE-U- 9 210 876

## Beschreibung

Die Erfindung betrifft einen Rohrofen mit darin arretiertem Probenträger für die elektrothermische Atomisierung von Analysenproben, mit einer durchgehenden Bohrung im mittleren Bereich des Mantels des Rohrofens für die Einführung der Analysensubstanz in das Ofeninnere, mit zwei in der Innenwand des Rohrofens angebrachten Nuten für die Aufnahme des Probenträgers, die sich, ausgehend von einer der zwei stirnseitigen Öffnungen des Rohrofens parallel zur mittleren Längsachse des Rohrofens erstrecken und die unterhalb einer gedachten, den Rohrofen in seiner Längserstreckung horizontal und mittig durchsetzenden Ebene in der der Bohrung für die Aufgabe der Analysensubstanz gegenüber oder in etwa gegenüberliegenden Hälfte des Rohrofens angeordnet sind und bei dem der im wesentlichen flache, blättchenförmige Probenträger in den auf der Innenwand des Rohrofens befindlichen Nuten gelagert ist und der Probenträger mindestens eine Vertiefung für die Aufnahme der Analysensubstanz hat, wobei diese Vertiefung unter der im Ofenmantel für die Aufgabe der Analysensubstanz bestimmten Bohrung angeordnet ist und sie betrifft des weiteren einen Rohrofen mit darin arretiertem Probenträger für die elektrothermische Atomisierung von Analysenproben, mit einer durchgehenden Bohrung im mittleren Bereich des Mantels des Rohrofens für die Einführung der Analysensubstanz in das Ofeninnere, mit auf der Innenwand des Rohrofens je auf einer Umfangslinie umlaufenden Stegen, von denen jeder zwei Nuten hat, die auf der Höhe einer gedachten Ebene, die sich unterhalb der die längsverlaufende Mittellinie des Rohrofens horizontal durchsetzenden Ebene parallel zu dieser befindet, angeordnet sind und in denen der Probenträger in zur Längserstreckung des Rohrofens paralleler Lage gelagert ist, wobei der im wesentlichen flache, blättchenförmige Probenträger aus einem breiteren Teil, der in Nähe einer der zwei Rohrofenöffnungen angeordnet und dort fixiert ist und einem sich an diesen Teil anschließenden, schmaleren Teil mit mindestens einer Vertiefung für die Aufnahme der Analysensubstanz, der in Nuten der Stege im Abstand von der Innenwand im Inneren des Rohrofens unterhalb der Bohrung für die Aufgabe der Analysensubstanz gelagert ist, besteht.

Bei der elektrothermischen Atomisierung für Zwecke der Bestimmung des Gehalts an chemischen Elementen wie dies z.B. und in großem Umfang bei der flammenlosen Atomabsorptionsspektroskopie (AAS) oder auch bei der Emissionsspektralanalyse durchgeführt wird, ist es für die Erzielung von reproduzierbaren Meßwerten und von scharfen Meßsignalen vorteilhaft, die aus Rohrofen und in dem Rohrofen befindlichen Probenträger bestehende Atomisierungszelle so zu erhitzen, daß der Rohrofen bezüglich seiner Erhitzung der Temperaturentwicklung im Probenträger voraneilt, damit die Verdampfung und Atomisierung der Analysensubstanz erst erfolgt, wenn sich die Temperatur innerhalb des Rohrofens stabilisiert hat. Von L'vov war deshalb eine Analysenanordnung mit getrennten Heizkreisen für den Rohrofen und für die Probenverdampfung vorgeschlagen worden, die zwar eine Messung unter weitgehend definierten, reproduzierbaren Bedingungen gestattete, aber wegen des hohen apparativen Aufwandes für den ständigen Gebrauch wie z.B. für Serienanalysen nicht verwendbar war. Es wurden deshalb Atomisierungsöfen entwickelt, bei denen der Probenträger keinen eigenen Heizkreis hat und durch Strahlung, Wärmeleitung und auch durch einen gewissen Betrag an Joule'scher Wärme erhitzt wird. Die besten Ergebnisse können jedoch erhalten werden, wenn die auf dem Probenträger befindliche und gegebenenfalls vorbehandelte, d.h. getrocknete und entgaste Analysenprobe allein durch die vom umgebenden Rohrofen kommende Strahlung erhitzt wird (H. Falk und A. Glismann, Fresenius, Z. Anal. Chem. (1986) 323, 748-753 und I.L. Shuttler und H.T. Delves, J. Analyt. Atomic Spectrometry 1987) 2, 171). Voraussetzung dafür ist eine entsprechende Lagerung des Probenträgers im Rohrofen. Die zwangsläufig gegebenen Kontakte zwischen Rohrofen und Probenträger müssen dazu so beschaffen sein, daß der Probenträger praktisch nicht vom elektrischen Heizstrom durchflossen und auch möglichst wenig mittels Wärmeleitung aufgeheizt wird. Ferner soll der Probenträger gut im Rohrofen fixiert sein, damit er auch in starken magnetischen Feldern wie bei der Zeeman-Untergrundkorrektur lagestabil bleibt.

Für die Realisierung dieser Bedingungen wurden neben anderen Rohrofen/Probenträger-Anordnungen wie z.B. der "Pin-Plattform", bei der der Probenträger auf stiftartigen Stützen auf dem Innenmantel des Ofens steht, Lösungen vorgeschlagen, bei denen ein flacher, plättchenförmiger Probenträger in im Rohrofeninnern vorhandenen Nuten eingelegt, bzw. eingehängt ist.

Nach der DE-PS 29 24 123 hat der Rohrofen dazu auf seiner Innenwand in Längsrichtung verlaufende dreieckige Führungsnuten, in denen ein in der Draufsicht rechteckiger Probenträger mit trapezförmigem Querschnitt in definierter Lage über seine gesamte Längserstreckung im Rohrofen gelagert und geführt ist. In dem deutschen Gebrauchsmuster G 87 14 926.5 wird eine Anordnung beschrieben, in der in der Innenwand des Rohrofens trapezförmige Nuten vorhanden sind, in die ein in der Draufsicht rechteckiger Probenträger mit ebenfalls trapezförmigem Querschnitt eingeschoben ist. Im Gegensatz zur Anordnung nach DE-PS 29 24 123 hat der Probenträger hier nur mehr entlang einer Linie Kontakt mit dem Rohrofen, da die korrespondierenden Flächen der Nuten und des Probenträgers nicht parallel sind. Nachteilig bei diesen Lösungen ist das Vorhandensein von nutenförmigen Ausnehmungen mit relativ scharfen, meist spitzwinkeligen Kanten in der Rohrofenwand. Beim pulsartigen Aufheizen und dem darauf folgenden Abkühlen entstehen entlang dieser Innenkanten Spannungen, die zu Rissen, die sich in die Ofenwand hinein entwickeln, führen können und die den Ofen vorzeitig unbrauchbar machen. Außerdem hat der Probenträger entlang seiner Längskanten mit dem Ofenkörper Kontakt und kann durch Joule'sche Wärme sowie Wärmeleitung in ungünstig hohem Maße aufgeheizt werden. Schließlich ist die Masse des Probenträgers für eine schnelle Aufheizung und Verdampfung der Analysenprobe bei diesen Lösungen noch zu hoch. Ein demgegenüber verbesserter Graphitrohrofen mit Probenträger ist in der DE-OS 38 23 346.0 beschrieben. Hier liegt der Probenträger nur in nutenförmigen Lagern, die in auf der inneren Mantelfläche des Rohrofens umlaufende Stege eingearbeitet sind. Ein weiterer Steg im hinteren Teil des Rohrofens dient als Anschlag für den Probenträger. Eine reproduzierbare Horizontallage des Probenträgers im Rohrofen wird so gewährleistet. Außerdem wurde die Masse des Probenträgers durch Anbringung einer U-förmigen Ausnehmung an dem zu seiner Manipulation vorgesehenen Ende verringert. Die auf der Rohrofeninnenwand umlaufenden Stege schirmen das Ofeninnere gegen die Ofenenden ab, so daß die Einstellung isothermer Bedingungen im Ofenzentrum erleichtert ist. Der Probenträger ist hier durch seine Lagerung in umlaufenden Stegen im Abstand von der Ofenwand gehalten, wodurch die Wärmeübergangsbrücken weiter verringert werden. Allerdings ist noch immer in gewissem Maße die Entwicklung Joule'scher Wärme möglich, da die Auflagen des Probenträgers in den mit der Rohrofenwand materialschlüssig verbundenen Stegen den die Analysenprobe aufnehmenden Teil des Probenträgers einschließen. Bei einer Weiterentwicklung dieser bereits verbesserten Ausführungsform nach der europäischen Patentanmeldung Nr. 0 442 009 A1 ist der Rohrofen aus Zonen mit unterschiedlichen Wandstärken aufgebaut. Der Probenträger besteht aus einem schmaleren, im mittleren Bereich des Rohrofens angeordneten, für die Aufnahme der Analysenprobe bestimmten Teil und einem sich daran anschließenden breiteren, durch die im wesentlichen U-förmige Gestalt mit ein wenig elastischen, federnden Schenkeln versehenen, auf der Seite der Rohrofenöffnung angeordneten Anfangsteil. Der Probenträger liegt auch hier in Nuten, die sich in zwei im Abstand um den Ofeninnenraum angeordneten umlaufenden Stegen befinden, ist aber durch die besondere Formgebung der Nuten und durch Schultern, bzw. Zapfen am breiteren Teil, die nach dem Einführen des Probenträgers an entsprechenden stegartigen Vorsprüngen des Rohrofeninneren anstehen, gegen Bewegungen in den drei Richtungen des Raumes gesichert und im Abstand von der Ofenöffnung gehalten. Diese Sicherung wird vor allen Dingen dadurch bewirkt, daß die Nuten den Probenträger oben und unten übergreifen und daß die beiden Schenkel des gabelförmigen, breiteren Teils des Probenträgers beim Einschieben über eine öffnungsseitige Verdickung der Innenwand des Rohrofens etwas zusammengedrückt werden und nach Überschreiten der Verdickung wieder in ihre Ausgangsposition zurückfedern und nun arretierend von innen an der Innenkante dieser Verdickung anstehen. Der Kontakt von Probenträger und Rohrofen ist nun im kritischen, schmalen, im Ofeninneren befindlichen Bereich des Probenträgers nur auf die linienförmigen Berührungszonen in den vier Nuten beschränkt. Durch die Einteilung des Rohrofens in Zonen mit unterschiedlichen Wandstärken werden Wärmesenken in Richtung der endseitigen Ofenöffnungen vermieden, es kann ein verbessertes Temperaturprofil bezüglich des zeitlichen Verlaufs und bezüglich der Erstreckung über den Ofenraum eingestellt werden und es werden Analysenergebnisse beeinträchtigende Matrixeffekte weitgehend unterdrückt.

Trotz der beschriebenen Verbesserungen ist es das Bestreben der Praktiker, die aus Rohrofen und Probenträger bestehenden Atomisierungsvorrichtungen weiter zu verbessern. Die zuletzt beschriebenen Anordnungen lassen wegen der den probentragenden Teil einschließenden, vierpunktartigen Auflage des Probenträgers in den Nuten der Stege noch immer eine gewisse Durchströmung und Entwicklung von Joule'scher Wärme und von direkter Wärmeleitung in einem ungünstigen Bereich zu, was letztlich zu Ungenauigkeiten der Analysenergebnisse führt. Die Einführung des Probenträgers in den Rohrofen erfordert relativ viel Behutsamkeit sowie Geschick und die Herstellung der zum Einführen und Arretieren des Probenträgers benötigten filigranen Strukturen an Probenträger und Rohrofen ist vergleichsweise mit hohem Aufwand verbunden.

Der vorliegenden Erfindung lag deshalb die Aufgabe zugrunde, unter Erhalt mindestens der bisher erreichten Vorteile
- die unerwünschte Erwärmung des Probenträgers durch elektrische Widerstandserhitzung und durch Wärmeleitung im probentragenden Teil des Probenträgers auszuschließen
- die Analysengenauigkeit und die Nachweisempfindlichkeit zu verbessern
- die Manipulation des Probenträgers beim Einsetzen und Arretieren zu vereinfachen und
- den Aufwand bei der Herstellung von Probenträger und Rohrofen zu reduzieren.

Die Erfindung löst die Aufgabe mit den kennzeichnenden Merkmalen der Patentansprüche 1 und 2. Die darauf folgenden Ansprüche formen die Erfindung weiter aus.

Allen Varianten der Erfindung ist die Kombination folgender Merkmale gemeinsam:
- Der breitere Teil des Probenträgers ist in Nuten gelagert, die sich, ausgehend von einer der zwei endseitigen Rohrofenöffnungen, entweder in der Rohrofeninnenwand oder in auf der Rohrofeninnenwand umlaufenden Stegen befinden und die sich nur über eine Zone von maximal einem Drittel der gesamten Ofenlänge erstrecken;
- der Probenträger ist in den Nuten durch die Keilwirkung des sich von innen zum Ende des Probenträgers hin verbreiternden oder verdickenden breiteren Teils des Probenträgers festgelegt und
- der schmalere, die Analysensubstanz aufnehmende Teil des Probenträgers hat keinen Kontakt mit der Rohrofeninnenwand und befindet sich freitragend in der Verdampfungs- und Atomisierungszone des Rohrofens.

Freitragende Anordnungen von Probenträgern in Rohröfen sind bereits aus den deutschen Offenlegungsschriften DE 35 45 635 A1 und DE 37 22 379 bekannt. Diese Anordnungen haben jedoch Nachteile. Bei dem Atomisator mit Probenträger nach DE-OS 35 45 635 ist ein schalenförmiger Probenträger mittels eines an seiner Unterseite befindlichen Zapfens, der in eine passende Öffnung in der Wand eines Atomisatorrohres einsetzbar ist, gehalten. Die Herstellung dieses Probenträgers ist aufwendig und seine Handhabung, die mit einem Manipulationshilfsgerät erfolgt, diffizil. In der Anordnung gemäß DE-OS 37 22 379 wird ein T-förmiger Probenträger, der aus einem schmaleren probentragenden und einem breiteren Halteteil besteht, verwendet. Der breitere Teil ist genau passend in in einer Ebene liegende Schlitze, die sich in einer Stirnseite des Rohrofens befinden, eingesetzt, während der schmale Teil freitragend in das Ofeninnere hineinragt. Bei dieser Lösung können, ausgelöst durch die thermische Ausdehnung des Probenträgers in den Halteschlitzen mechanische Spannungen entstehen, die an den Wurzeln der Schlitze den Rohrofen unbrauchbar machende Risse auslösen. Bei nicht genauer Einpassung des Halteteils des Probenträgers in die Schlitze treten dagegen Lichtbögen und Analysenstörungen durch Vermischen des inneren und des äußeren Gasstromes auf. Erst durch die kombinierte Anwendung des Probenträgers mit freitragendem probentragendem Teil in Verbindung mit dem Klemmsitz des Probenträgers in entsprechend geformten und angeordneten Nuten des Rohrofens wird eine einfach zu handhabende, einen sicheren Sitz des Probenträgers gewährleistende, wenig störungsanfällige und den modernen Erfordernissen der Spektralanalyse entsprechende Analysenanordnung zur Verfügung gestellt.

Der für die erfindungsgemäße Lösung verwendete Rohrofen besteht vorzugsweise aus Elektrographit oder mit Pyrokohlenstoff beschichtetem Elektrographit genügender Reinheit. Die Verwendung anderer hochtemperaturbeständiger und elektrisch genügend leitfähiger Materialien ist ebenfalls möglich. Der Rohrofen hat eine längliche Form mit rundem, rechteckigem, quadratischem oder einem anderen polygonalen Querschnitt, wobei der runde Querschnitt bevorzugt wird. Zur Eingabe der Analysenprobe besitzt er im mittleren Mantelbereich eine kleine, den Ofenmantel durchsetzende Bohrung von ca. 0,5 bis 1,5 mm Durchmesser. Dieser Bohrung gegenüber ist im Ofeninneren der die Analysenprobe aufnehmende Teil des Probenträgers positioniert. An seinen stirnseitigen Öffnungen hat der Rohrofen Flächen für die Kontaktierung mit der elektrischen Heizvorrichtung der Analysenapparatur, die meistens in Form angedrehter Fasen ausgeführt sind. Der Ofen kann aber auch mit an der Mantelfläche angebrachten Kontaktstellen oder -Stücken für eine seitliche Aufheizung versehen sein, wie sie aus dem Stand der Technik bekannt sind. Die Wandstärke über die Länge des Rohrofens kann konstant sein, sie kann jedoch auch zonenweise unterschiedlich sein wie dies aus der DE-OS 21 48 777 oder der EP-Anmeldung Nr. 0 442 009 A1 bekannt ist, um in der Atomisierungszone Temperaturkonstanz zu erreichen.

Zur Aufnahme und Halterung des Probenträgers sind in der Innenwand des Rohrofens, ausgehend von einer der zwei stirnseitigen Öffnungen auf einer Länge von maximal einem Drittel der Gesamtlänge des Rohrofens an den Kanten einer gedachten Ebene, die unterhalb der Äquatorebene aber parallel zu dieser verläuft, befindliche, gegenüberliegende Nuten vorhanden. Die gedachte Hilfsebene definiert gleichzeitig die Lage des Probenträgers im Rohrofen. Vorzugsweise ist die Länge der Nuten in Abhängigkeit von der Seitenlänge des Halteteils des Probenträgers so gewählt, daß der Probenträger beim Einschieben auf Anschlag an der hinteren Nutenwand genau die gewünschte Position im Rohrofen einnimmt. Seitenlänge des Halteteils und Nutenlänge sind bevorzugt gleich. Der schmalere Teil des Probenträgers befindet sich bei ordnungsgemäß eingeschobenem Probenträger senkrecht unterhalb der in der Rohrofenwand vorhandenen Probeneingabeöffnung. Häufig ist die Probeneingabeöffnung auch mit leichter Winkelabweichung von der auf dem Probenträger stehenden Normalen angeordnet.

Um eine Schwächung des Rohrofenmantels zu vermeiden und um die Kontakte des Halteteils des Probenträgers mit der Rohrofenwand zu minimieren, kann der Rohrofen, ausgehend von einer der zwei stirnseitigen Ofenöffnungen, über einen Bereich von einem Drittel der Gesamtlänge des Rohrofens, einen oder mehrere, bevorzugt jedoch zwei, je auf einer Umfangslinie umlaufende(n) Steg(e) haben, in dem/denen sich Nuten für die Aufnahme des breiteren Teils des Probenträgers befinden. Diese Nuten erstrecken sich nicht bis in die Ofenwand hinein. Im übrigen sind sie räumlich wie die im vorstehenden beschriebenen, in der Ofenwand befindlichen Nuten angeordnet. Der Abstand des der Ofenöffnung nächsten Steges von dem dem Ofeninneren nächsten Steg richtet sich des weiteren nach der Seitenausdehnung des breiteren Teils des Probenträgers. Er entspricht höchstens der Länge der der Ofenwand zugekehrten Seiten des breiten Teils des Probenträgers, kann aber auch darunter liegen. Unter dem maximalen Abstand ist hier eine Entfernung zu verstehen, bei der der Halteteil des Probenträgers noch vollständig in den in den Stegen befindlichen Nuten aufliegt. Der von der stirnseitigen Ofenöffnung gesehen erste Steg schließt vorzugsweise mit der Ofenöffnung ab oder ist nur einige zehntel Millimeter von dieser entfernt. Dies ermöglicht ein leichtes Einführen des Probenträgers in die Haltevorrichtung. Außerdem kann der Probenträger so positioniert werden, daß er nach Wahl entweder Kontakt mit der Kühlung der Stromzuführungseinrichtung hat oder nicht. Falls nur ein Steg vorhanden ist, so ist dieser so breit auszuführen, daß die darin befindlichen Nuten eine in Längsrichtung des Rohrofens gesehen solche Länge haben, daß der Probenträger darin einen genügenden Halt findet.

Die Nuten in der Rohrofenwand bzw. der Steg oder die Stege mit den darin befindlichen Nuten können sich, ausgehend von der stirnseitigen Rohrofenöffnung, von der sie ausgehen oder an der sie angeordnet sind, auch nur über 20 oder bevorzugt über 15 % der Gesamtlänge des Rohrofens erstrecken. Die Probenträger sind dann bezüglich ihrer Maße diesen Verhältnissen entsprechend angepaßt.

Die Nuten können jede, eine Halterung des Probenträgers bewirkende Form haben. Sie können von Quadraten, Rechtecken, Dreiecken, Trapezen oder Polygonen abgeleitete Querschnitte haben, wobei stets ein Segment dieser Querschnittsfläche durch die Nutenöffnung ersetzt ist. Bevorzugt werden jedoch Nuten ohne scharfe Innenkanten verwendet, um der Gefahr der Rißbildung zu begegnen. Die Nuten haben dementsprechend mindestens abgerundete Kanten oder Ecken, bevorzugt aber einen im wesentlichen runden, an der Basis, d.h. der unteren Auflagefläche des Probenträgers in eine Waagerechte übergehenden, dem Ofeninneren zu offenen Querschnitt. Des weiteren können die Nuten nach oben offen sein, so daß der Probenträger auch von oben in die Nuten eingedrückt werden kann. Für einen sicheren Sitz des Probenträgers im Rohrofen ist es jedoch günstiger, wenn die Nuten die Seiten des Halteteils des Probenträgers auch oben umgreifen. Dies ist z.B. beim Betrieb in starken magnetischen Wechselfeldern wie der Zeeman-Untergrundkorrektur von Vorteil.

Der Probenträger hat im wesentlichen die Form eines flachen Plättchens und ist aus zwei, eine stoffliche Einheit bildenden Teilen, dem Halteteil und dem die Analysenprobe aufnehmenden Teil aufgebaut. Der Halteteil ist breiter als der die Analysenprobe aufnehmende Teil.

Er ist in den entweder in der Ofenwand oder in den Stegen befindlichen Nuten, die sich von einer der zwei stirnseitigen Rohrofenöffnungen aus erstrecken, gelagert und dort arretiert und dient so als Halte- und Befestigungsorgan für den schmaleren, probenaufnehmenden oder -tragenden Teil. Der schmalere probentragende Teil ragt freitragend, d.h. ohne jeden Kontakt zu Auflagen oder zur Ofenwand in den Rohrofen hinein und erstreckt sich über dessen gesamte mittlere Zone. Er hat vorzugsweise eine zentrale, wannen- oder muldenförmige Vertiefung, die gegenüber der in der Rohrofenwand befindlichen Probeneingabeöffnung angeordnet ist und die der Aufnahme der Analysenflüssigkeit dient.

Die in den Nuten in der Rohrofenwand oder den Stegen liegenden Seiten oder Flächen, bzw. die von den Nuten umgriffenen Kanten oder Seitenbereiche des Halteteils sind auf die Form der Nuten abgestimmt. Sie können der Form der Nuten komplementär sein. Sie können aber auch so gearbeitet sein, daß sie nur entlang schmaler Flächen in den Nuten anliegen, um Wärmebrücken möglichst klein zu halten. Wegen der im folgenden noch zu beschreibenden Keilwirkung des Halteteils des Probenträgers in den Nuten sollen jedoch scharfe Kanten an den in die Nuten eingreifenden Seiten des Probenträgers, die entlang quasi linienförmiger Auflagen in den Nuten spannungsvermehrend wirken würden, vermieden werden.

Der feste, unverrückbare Sitz des Probenträgers im Rohrofen wird durch eine besondere Form des Halteteils des Probenträgers bewirkt. Dieser Teil des Probenträgers ist in der Draufsicht auf die Flachseite des Probenträgers dergestalt keilförmig ausgebildet, daß der breite Teil des Keils den am Ofeneingang befindlichen Anfang des Probenträgers bildet und der schmale Teil des Keils in Nähe des Übergangs des Halteteils in den probentragenden, schmalen Teil des Probenträgers liegt. Nach einer anderen Ausführungsform bleibt die Breite des Halteteils des Probenträgers konstant aber seine Dicke bzw. Stärke steigt von der Übergangszone zum schmalen, freitragenden Teil des Probenträgers zur an der Ofenöffnung befindlichen Seite des Halteteils an. Außerdem ist noch die Anbringung entsprechender kürzerer, auch eine Keilwirkung entfaltender Formen an den in die Nuten eingreifenden Zonen des Halteteils möglich und schließlich können in Umkehrung des dargelegten Wirkungsprinzips die Nuten keilförmig gearbeitet sein. Die Zonen der Nuten, die in Richtung des Rohrofeninneren liegen, haben dann beispielsweise eine geringere Höhe als die in Nähe der entsprechenden Rohrofenöffnung befindlichen. Es ist nun sofort erkennbar, daß der Probenträger beim Einschieben oder Eindrücken in den Rohrofen in den Nuten verkeilt wird und danach fest in ihm gehalten ist.

Der die Steigung der verschiedenen Keilformen am Halteteil des Probenträgers oder in den Nuten definierende Steigungswinkel, bei dem einerseits eine gute Festlegung des Probenträgers erreicht ist und bei dem andererseits noch keine Schädigung des Rohrofens z.B. durch Risse eintritt, liegt bevorzugt im Bereich von 2 und 4°.

Nach einer bevorzugten Ausführungsform hat der Probenträger auf der dem Ofenende zugekehrten Seite, von der die Nuten ausgehen oder an der sich die Stege mit den Nuten befinden, eine symmetrisch zu seiner mittleren Längsachse verlaufende, zu dem bezeichneten Ofenende hin offene, U-förmige Ausnehmung. Der in dieser Zone befindliche Teil des Probenträgers wird in diesem Fall durch zwei sich gegenüberliegende Stege gebildet, die eine gewisse Elastizität haben und infolgedessen ein wenig in Richtung des Inneren der U-förmigen Ausnehmung gedrückt werden können, ohne zu brechen. Der Teil der seitlich nach außen gerichteten Kanten dieser Schenkel, der sich im Bereich des breiteren Halteteils des Probenträgers befindet, greift in die Nuten auf der Innenwand des Rohrofens ein. Wegen der keilförmigen Ausbildung des Halteteils des Probenträgers, das an seinem freien Ende etwas breiter als die lichte Weite der sich gegenüberliegenden, wandseitigen Nutenböden ist, ergibt sich in Verbindung mit der Federwirkung der Schenkel des Probenträgers ein besonders spannungsarmer und doch sicherer, fester Sitz des Probenträgers in seinen Halterungen. Bei dieser Lösung kann der Druck, den die Schenkel des Probenträgers auf die Rohrofenwand ausüben, durch entsprechende Wahl der Stärke und der Länge der Schenkel eingestellt und auch auf verschiedene Materialqualitäten abgestimmt werden. Außerdem wird bei dieser Ausführungsform ein zu starker Wärmeabfluß aus dem in der Rohrofenmitte befindlichen Teil des Probenträgers der die Temperaturkonstanz in der Atomisierungszone im Meßzeitraum stören würde, verhindert.

Der Probenträger besteht aus Pyrographit, aus spektralreinem Elektrographit, vorzugsweise aber aus mit Pyrokohlenstoff beschichtetem Elektrographit. Er kann auch aus hochschmelzenden Metallen wie z.B. Tantal oder Wolfram bestehen. Die bisherige Erfahrung war, daß Probenträger aus Elektrographit mit einer Pyrokohlenstoff- oder Pyrographitbeschichtung im allgemeinen keine ausreichend lange Lebensdauer hatten, wenn sie durch elektrischen Stromdurchgang erhitzt wurden. Deshalb wurden in der analytischen Praxis fast ausschließlich Probenträger aus massivem Pyrographit eingesetzt, da sie den Beanspruchungen besser widerstanden. Der Nachteil der vollständig aus Pyrographit bestehenden Probenträger war neben ihrem hohen Preis das Auftreten von Matrixeffekten, die offenbar aus der ausgeprägten Schichtstruktur des Pyrographits resultierten. Fremdelemente oder Restelemente des Analyten konnten sich zwischen den Schichten des Pyrographits einlagern und wurden bei nachfolgenden Analysenvorgängen unkontrolliert abgegeben. Überraschenderweise wurde bei Anwendung der erfindungsgemäßen Analysenanordnung festgestellt, daß bei Verwendung von Probenträgern aus spektralreinem, mit Pyrographit oder Pyrokohlenstoff beschichtetem Elektrographit drei Vorteile auftreten:
1. Die Lebensdauer der mit Pyrokohlenstoff beschichteten Probenträger übersteigt diejenige der Probenträger aus Pyrographit erheblich. Sie kann, in Abhängigkeit von den Analysenbedingungen, das Doppelte betragen.
2. Die Schärfe der Analysensignale ist drastisch gesteigert. Wie aus Tabelle 1 hervorgeht, sind die Peaks um das 3- bis 4-fache erhöht. Dadurch ist die Analysengenauigkeit und die Nachweisschärfe beträchtlich gesteigert.

**Tabelle 1**

| Mittelwert von Höhen und von Flächeninhalten der Analysensignale von je 400 Atomabsorptionsspektralanalysen im Vergleich von zwei verschiedenen Probenträgertypen. | | | |
|---|---|---|---|
| | | Peak-Höhe | Peak-Fläche |
| Probenträger aus Elektrographit mit Pyrographitbeschichtung | Rohr 1 | 0,658 | 0,311 |
| | Rohr 2 | 0,634 | 0,304 |
| | Rohr 3 | 0,602 | 0,292 |
| Probenträger aus Pyrographit (Vergleich) | Rohr 4 | 0,153 | 0,274 |
| | Rohr 5 | 0,147 | 0,268 |
| | Rohr 6 | 0,184 | 0,294 |

- Analysenflüssigkeit:: 0,01 µg Chrom/ml, verdünnt mit 5 % HNO₃/0,05% Mg(NO₃)₂.
- Pro Analyse verwendete Menge:: 20 µl.
Auch bei diesen Bestimmungen des Chromgehalts, die Atomisierungstemperaturen von 2650 °C erfordern, lag die Lebensdauer der Probenträger bei deutlich über 400 Zyklen.
3. Es wurden praktisch keine Matrixeffekte beobachtet.

Ein weiterer Vorteil liegt in der Preisgünstigkeit der nur mit Pyrographit beschichteten Probenträger aus Elektrographit. Sie sind um ein Mehrfaches billiger als Probenträger aus massivem Pyrographit.

Als fertigungstechnisch vorteilhaft und besonders funktionssicher hat sich ein Rohrofen mit darin erfindungsgemäß festgelegtem Probenträger erwiesen, der erst nach dem Einsetzen des Probenträgers mindestens in seinem Innenbereich mit Pyrokohlenstoff oder Pyrographit beschichtet worden ist. Unter diesen Umständen ist nur eine sehr geringe oder gar keine Keilwirkung zur Festlegung des Probenträgers im Rohrofen notwendig, da die Pyrokohlenstoff- bzw. Pyrographitschicht den Probenträger fest mit dem Rohrofen verbindet.

Die Erfindung wird nachstehend anhand von Zeichnungen beispielhaft erläutert. Sie ist aber nicht auf diese beschränkt.

Es zeigen:
- Fig. 1,: einen Probenträger in perspektivischer Ansicht.
- Fig. 2,: einen Graphitrohrofen mit einem Probenträger, der in Nuten eingelegt ist, die sich in der Rohrofenwand befinden, in einer perspektivischen Darstellung mit Durchsicht.
- Fig. 3,: in ebenfalls perspektivischer Darstellung, einen Abschnitt eines Graphitrohrofens, bei dem der andeutungsweise wiedergegebene Probenträger in Nuten gelagert ist, die sich in auf der Innenwand des Rohrofens umlaufenden Stegen befinden.
- Fig. 4 bis 9,: Querschnitte durch den vorderen Teil von Graphitrohröfen mit verschiedenen Darstellungen von Nutenformen ohne (Fig. 4) und mit eingelegtem (Fig. 5 bis 9) Probenträger, wobei der Probenträger jeweils eine unterschiedliche Querschnittsform im breiteren Teil aufweist.
- Fig. 8: gibt einen Querschnitt durch einen Rohrofen wieder, bei dem der Probenträger in Nuten gelagert ist, die sich in auf der Ofeninnenwand umlaufenden Stegen befinden, während
- Fig. 9: einen Schnitt durch einen mit Pyrokohlenstoff beschichteten Rohrofen darstellt.

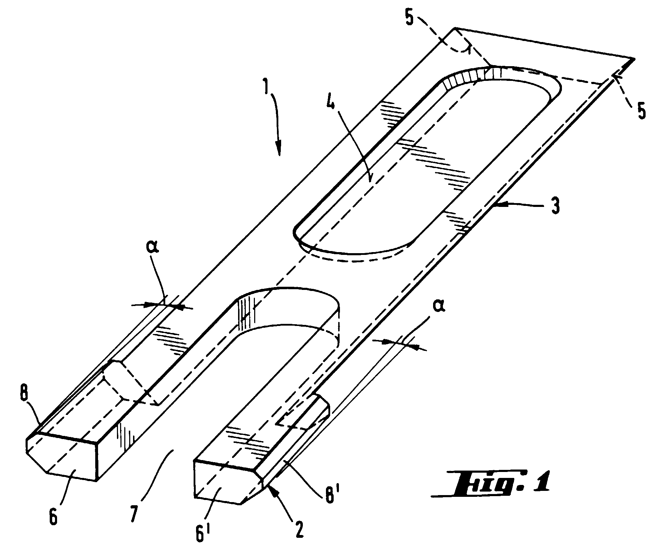

Der in Fig. 1 dargestellte Probenträger 1 besteht aus einem breiteren Tragteil 2 und einem schmaleren Teil 3, das eine Vertiefung 4 für die Aufnahme der Analysenprobe hat. Der schmalere Teil 3 weist an seinen der Ofenwand zugekehrten beiden Längsseiten Fasen 5 auf, um diesen Teil des Probenträgers 1 im Abstand von der Innenwand 14 des Rohrofens 9 halten zu könnnen und um die Masse des schmaleren Teils 3 zu verringern. Der Verringerung der Masse des Probenträgers einerseits und andererseits zur Ausbildung von zwei sich vom schmaleren Teil 3 durch den breiteren Teil 2 bis zum Anfang des Probenträgers 1 erstreckenden Schenkeln 6, 6' dient die U-förmige Ausnehmung 7, die sich auch über einen Teil des schmaleren Teils 3 des Probenträgers 1 erstreckt. Diese Schenkel 6, 6' sind etwas elastisch und können sich an die Seitenwände der Nuten 13, 13' federnd andrücken, in denen der Probenträger 1 gehalten ist. Der breitere Tragteil 2 weist an seinen seitlichen Flanken 8, 8', die in die in der Ofeninnenwand 14 oder den umlaufenden Stegen 18, 18' befindlichen Nuten 13, 13'; 17, 17', 17", 17''' eingreifen, eine leichte Steigung auf, die durch den Winkel α definiert ist und die dem Tragteil 2 die Form eines von außen in das Rohrofeninnere oder in Richtung auf den schmaleren Teil 3 des Probenträgers 1 zulaufenden Keils verleiht.

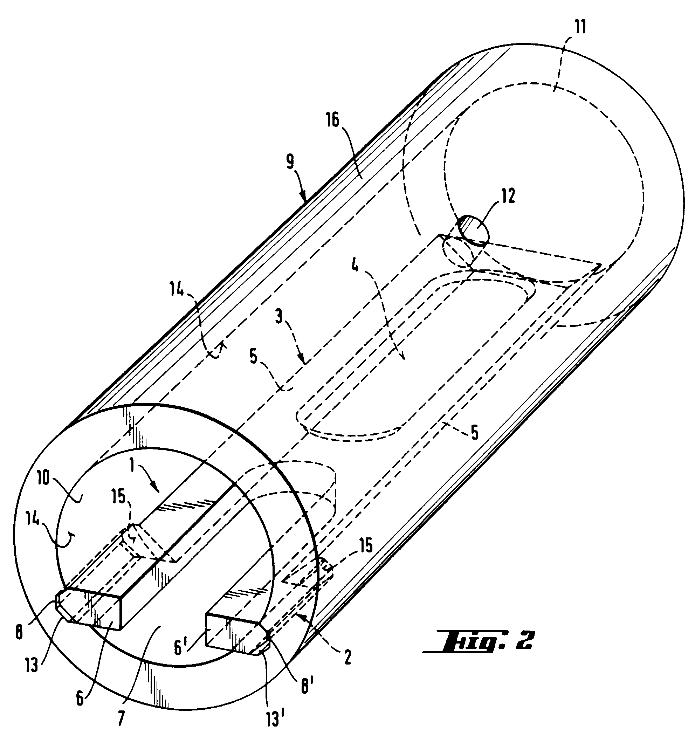

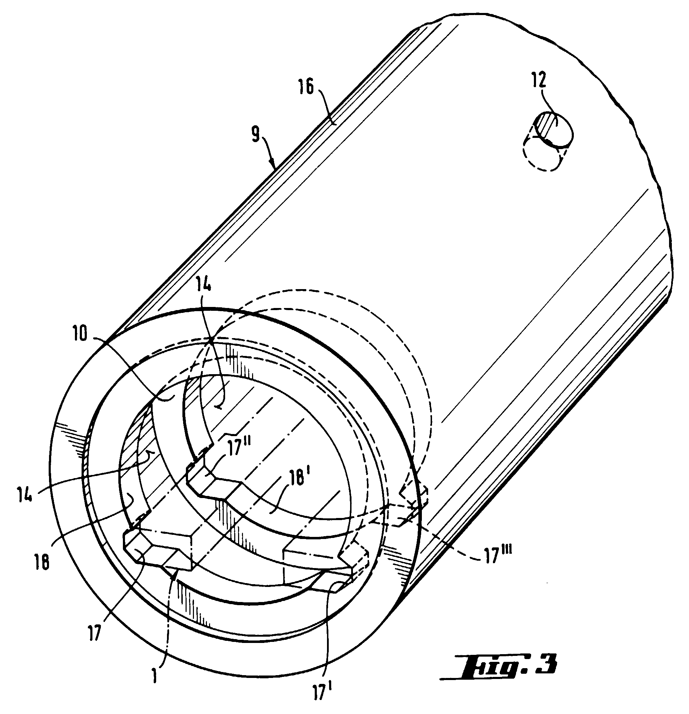

Fig. 2 zeigt einen Rohrofen 9 mit den endseitigen Öffnungen 10 und 11 sowie der im mittleren Mantelbereich angeordneten Öffnung 12 für die Einführung der Analysenprobe in das Ofeninnere und deren Aufgabe auf die muldenartige Vertiefung 4 des Probenträgers 1. Von der Rohrofenöffnung 10 gehen zwei auf der Rohrofeninnenwand 14 verlaufende, im unteren Drittel des Rohrofens angeordnete, sich gegenüberliegende und einander parallele Nuten 13, 13' aus, in die die seitlichen, keilförmigen Flanken 8, 8' des Halteteils 2 des Probenträgers 1 eingreifen und den Probenträger 1 durch die Keilwirkung festlegen. Der Halteteil 2 des Probenträgers 1 schließt auf einer Seite mit der Ofenöffnung 10 ab und erstreckt sich zum Ofeninneren hin bis zum Ende der Nuten 13, 13', an deren hinterer Begrenzungsfläche 15 er wie an einem Anschlag anstößt und damit die Position des Probenträgers im Rohrofen festlegt. An den Halteteil 2 schließt sich der schmalere, die Analysenprobe aufnehmende Teil 3 des Probenträgers 1 an. Er ragt freitragend, d.h. ohne jede Berührung mit der Ofeninnenwand 14 so in den Rohrofen 9 hinein, daß sich die Vertiefung 4 für die Aufnahme der Analysenprobe unterhalb oder schräg unterhalb der im Rohrofenmantel 16 befindlichen Probenaufgabeöffnung 12 und damit im Atomisierungsbereich des Rohrofens 9 befindet.

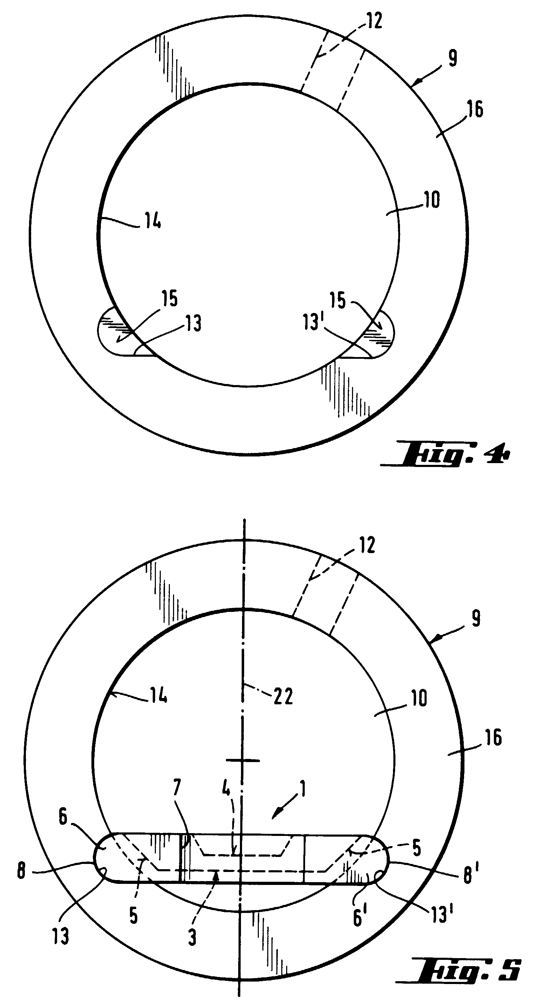

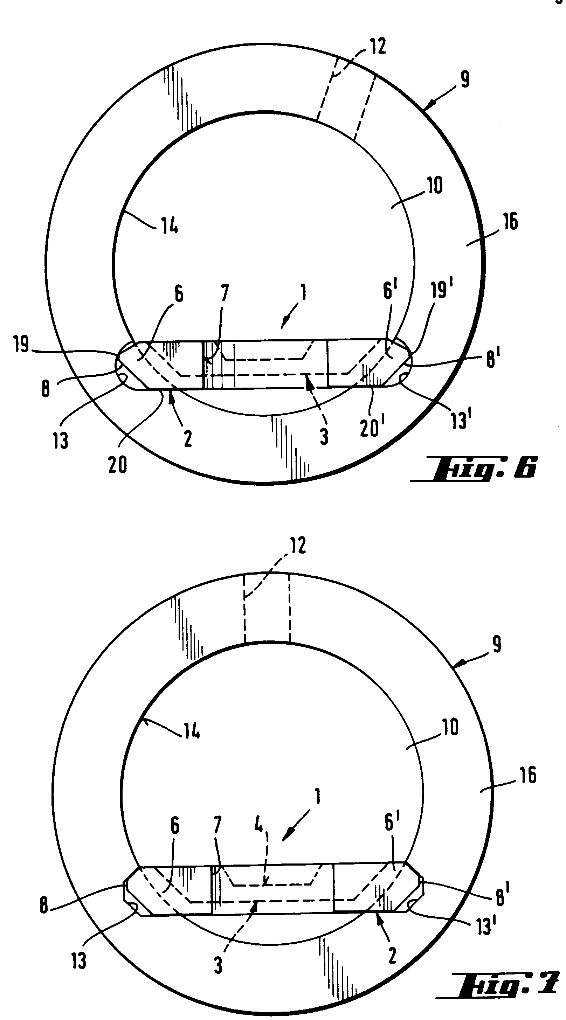

Der in Fig. 3 wiedergegebene Rohrofen 9 hat statt in die Ofeninnenwand 14 eingearbeitete Nuten 13, 13' auf der Innenwand 14 in Nähe der endseitigen Rohrofenöffnung 10 zwei auf Umfangslinien im Abstand voneinander umlaufende Stege 18, 18', von denen jeder zwei im unteren Drittel angeordnete und sich gegenüberliegenden Nuten 17, 17', 17", 17''' hat, die in Längsrichtung des Rohrofens 9 gesehen, auf gleicher Höhe angebracht sind. Ein Steg 18 befindet sich dicht neben der Ofenöffnung 10, der zum Ofeninneren hin folgende Steg 18' befindet sich im Abstand von maximal einem Drittel der gesamten Länge des Rohrofens von dieser Ofenöffnung 10 entfernt.
Der nur andeutungsweise wiedergegebene Probenträger 1 ist hier in der der Darstellung in Fig. 2 entsprechenden Weise in den Nuten 17, 17', 17", 17''' gelagert und wie in Fig. 2 besser zu sehen, durch die keilförmig verlaufenden Flanken 8, 8' des breiteren Teils 2 des Probenträgers 1 festgelegt. Beachtenswert ist, daß letzterer durch die Lagerung in den Stegen 18, 18' bis auf die Berührungsflächen in den Nuten 17, 17', 17", 17''' im Abstand von der Rohrofeninnenwand 14 gehalten ist. Der schmalere Teil 3 des Probenträgers 1 befindet sich dementsprechend, wie in den Fig. 2 und 8 dargestellt, auch hier im mittleren Bereich des Rohrofens 9 und ist im Abstand von der Rohrofeninnenwand 14 freitragend gehalten.

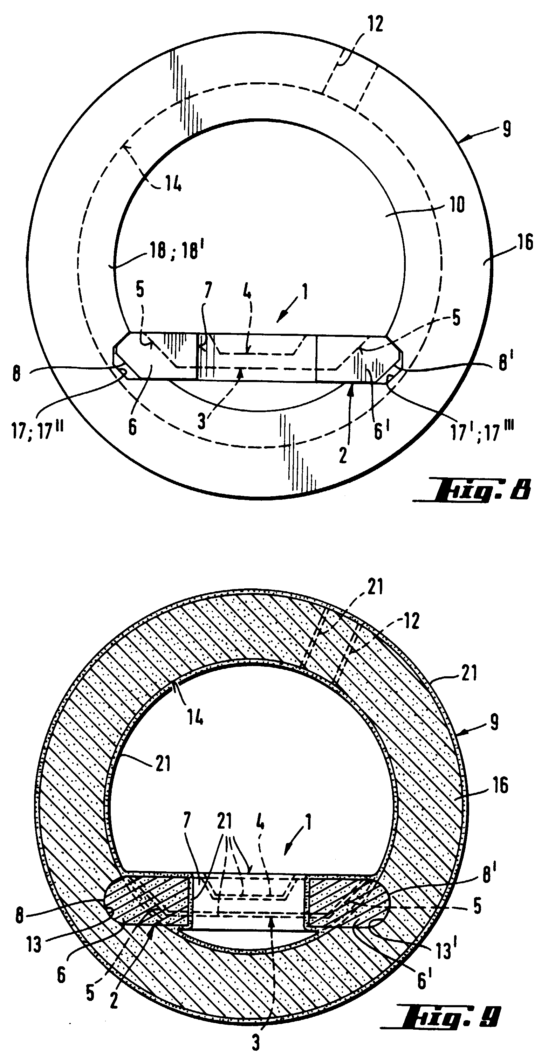

Die Figuren 4 bis 9 zeigen Rohrofen-9-querschnitte mit verschiedenen Ausführungsformen der Haltevorrichtungen des Probenträgers 1.

In Fig. 4 sind in die Rohrofeninnenwand 14 eingearbeitete, im oberen Teil runde und im unteren Teil waagerecht auslaufende Nuten 13, 13' zu sehen.

Fig. 5 gibt einen Fig. 4 entsprechenden Querschnitt, jedoch mit eingelegtem Probenträger 1 wieder, dessen in den Nuten 13, 13' anliegende Flanken 8, 8' der Form der Nuten 13, 13' komplementär sind. Zu erkennen ist auch die Probeneingabeöffnung 12 und deren Position im leichten Winkel zur auf dem schmaleren Teil des Probenträgers 3, bzw. dessen Vertiefung 4 für die Aufnahme der Analysenprobe stehenden Normalen 22.

In Fig. 6 ist wiederum die im wesentlichen runde, an der Basis waagerecht auslaufende Form der Nuten 13, 13' zu erkennen. Die in diese Nuten 13, 13' eingreifenden Seiten 8, 8' des breiteren Teils 2 des Probenträgers 1 sind mehreckig ausgebildet und liegen in den Nuten 13, 13' nur entlang bestimmter Linien 19, 19' oder Flächen 20 20' an. Die entlang der Linien 19, 19' anliegenden Kanten sind gebrochen, um die Entstehung von Risse ausbildenden Spannungen in der Rohrofenwand zu vermeiden.

Fig. 7 gibt einen Probenträger 1 mit mehreckiger Ausbildung der in die Nuten 13, 13' eingreifenden Seiten 8, 8' des breiteren Teils 2 des Probenträgers 1 wieder. Die Nuten 13, 13' in der Rohrofeninnenwand 14 des Rohrofens 9 entsprechen einem Abschnitt eines Achtecks. Die Seiten 8, 8' des Probenträgers 1 haben nur Kontakt mit zwei der vier Flächen der Nuten 13, 13'.

In Fig. 8 ist ein Rohrofen 9 mit auf der Rohrofeninnenwand 14 umlaufenden Stegen 18, 18' von denen nur der der Rohrofenöffnung 10 nächste zu sehen ist, wiedergegeben. In diesem Fall sind die den Probenträger haltenden Nuten 17, 17', 17", 17 ''', von denen aus Gründen der Darstellung wiederum nur die der Rohrofenöffnung 10 nächsten zu erkennen sind, in den umlaufenden Stegen 18, 18' angebracht. Sie greifen nicht in die Rohrofeninnenwand 14 ein und schwächen diese demzufolge auch nicht oder rufen Inhomogenitäten der elektrischen Stromleitung oder der Wärmeführung hervor. Die Form der in die Nuten 17, 17', und nicht sichtbar, 17", 17''' eingreifenden Seitenteile 8, 8' des breiteren Teils 2 des Probenträgers 1 entspricht hier den in Fig. 7 dargestellten entsprechenden Teilen.

Fig. 9 gibt einen Rohrofen 9 mit im Inneren festgelegtem Probenträger 1 wieder, bei dem alle gaszugänglichen Teile nach dem Festlegen des Probenträgers 1 in den Nuten 13, 13' des Rohrofens 9 mit einer Schicht aus Pyrokohlenstoff 21 versehen worden sind. Der Probenträger 1 ist zusätzlich zu seiner mechanischen Verankerung in den Nuten 13, 13' durch die Pyrokohlenstoffschicht 21 über Stoffbrücken mit dem Rohrofen 1 verbunden.

Abschließend seien die Vorteile der Erfindung zusammengefaßt:
- der Probenträger ist durch unkomplizierte Keil- bzw. Keil- in Verbindung mit Federwirkung in Nuten gegen Bewegungen in allen drei Richtungen des Raumes sicher festgelegt. Die Handhabung der Teile ist sehr einfach.
- der Probenträger hat eine einfache, mechanischen Belastungen gegenüber robuste Form.
- der Preis des Probenträgers ist um ein mehrfaches reduziert.
- der die Analysenprobe tragende Teil des Probenträgers kann durch Joule'sche Wärme nicht mehr aufgeheizt werden, da sich entlang seiner Längserstreckung wegen der freitragenden Anordnung kein Potentialgefälle mehr aufbauen kann. Die Beeiflussung dieses Teils des Probenträgers durch Wärmeleitung ist auf ein vernachlässigbares Maß gesenkt. Bei anderen, bekannten freitragenden Anordnungen beobachtete Nachteile treten bei dieser Lösung nicht auf.
- die Schärfe der erhaltenen Analysensignale und damit die Nachweisempfindlichkeit wurde erheblich gesteigert.
- der Probenträger hat im Vergleich eine längere Lebensdauer.

## Patentansprüche

1. Rohrofen mit darin arretiertem Probenträger für die elektrothermische Atomisierung von Analysenproben, mit
einer durchgehenden Bohrung im mittleren Bereich des Mantels des Rohrofens für die Einführung der Analysensubstanz in das Ofeninnere,
mit
zwei in der Innenwand des Rohrofens angebrachten Nuten für die Aufnahme des Probenträgers, die sich, ausgehend von einer der zwei stirnseitigen Öffnungen des Rohrofens parallel zur mittleren Längsachse des Rohrofens erstrecken und die unterhalb einer gedachten, den Rohrofen in seiner Längserstreckung horizontal und mittig durchsetzenden Ebene in der der Bohrung für die Aufgabe der Analysensubstanz gegenüber oder in etwa gegenüberliegenden Hälfte des Rohrofens angeordnet sind
und bei dem
der im wesentlichen flache, blättchenförmige Probenträger in den auf der Innenwand des Rohrofens befindlichen Nuten gelagert ist und der Probenträger mindestens eine Vertiefung für die Aufnahme der Analysensubstanz hat, wobei diese Vertiefung unter der im Ofenmantel für die Aufgabe der Analysensubstanz bestimmten Bohrung angeordnet ist,
dadurch gekennzeichnet, daß
die Nuten (13; 13') für die Aufnahme des Probenträgers (1) von einer stirnseitigen Öffnung (10) des Rohrofens (9) ausgehen und sich von dort maximal auf eine Länge von einem Drittel der Länge des Rohrofens (9) erstrecken,
daß
der Probenträger (1) aus einem breiteren Halteteil (2), der in der Nähe der endseitigen Rohrofenöffnung, (10) von der die Nuten (13; 13') ausgehen, angeordnet und dort in den Nuten (13; 13') fixiert ist und einem sich an diesen Teil (2) anschließenden, schmaleren Teil (3), der sich freitragend im Abstand von der Innenwand (14) im Inneren des Rohrofens (9) unterhalb der Bohrung (12) für die Einführung der Analysensubstanz befindet, besteht
und daß
die Seiten des breiteren Teils (2) des Probenträgers (1) in die Nuten (13; 13') eingreifen und von ihrem, dem Ofeninneren zugekehrten Bereich ausgehend zu der Ofenöffnung (10) hin, an der der breitere Teil (2) des Probenträgers (9) beginnt, in der Weise keilförmig breiter oder dicker werden, daß der Probenträger (1) einerseits über die ganze Länge seines breiteren Bereichs (2) durch die Nuten (13; 13') geführt und andererseits durch die durch die Form des breiteren, bzw. dickeren Teils des Probenträgers (2) bedingte Keilwirkung in den Nuten (13; 13') durch einen festen Klemmsitz arretiert gehalten ist.

2. Rohrofen mit darin arretiertem Probenträger für die elektrothermische Atomisierung von Analysenproben,
mit
einer durchgehenden Bohrung im mittleren Bereich des Mantels des Rohrofens für die Einführung der Analysensubstanz in das Ofeninnere
mit
auf der Innenwand des Rohrofens je auf einer Umfangslinie umlaufenden Stegen, von denen jeder zwei Nuten hat, die auf der Höhe einer gedachten Ebene, die sich unterhalb der die längsverlaufende Mittellinie des Rohrofens horizontal durchsetzenden Ebene und parallel zu dieser befindet, angeordnet sind und in denen der Probenträger in zur Längserstreckung des Rohrofens paralleler Lage gelagert ist,
wobei
der im wesentlichen flache, blättchenförmige Probenträger aus einem breiteren Teil, der in Nähe einer der zwei Rohrofenöffnungen angeordnet und dort fixiert ist und einem sich an diesen Teil anschließenden, schmaleren Teil mit mindestens einer Vertiefung für die Aufnahme der Analysensubstanz, der in Nuten der Stege im Abstand von der Innenwand im Inneren des Rohrofens unterhalb der Bohrung für die Aufgabe der Analysensubstanz gelagert ist, besteht,
dadurch gekennzeichnet, daß
der Rohrofen (9) von einem Ende (10) aus betrachtet, in seinem ersten Drittel an der Innenwand (14) mindestens zwei im Abstand voneinander je auf einer Umfangslinie umlaufende Stege (18; 18') hat, von denen jeder in seinem unteren Drittel zwei Nuten (17; 17' und 17"; 17''') aufweist, in denen der Probenträger (1) gehalten ist
und daß
der Abstand des der Rohrofenöffnung (10) nächsten (18) von dem dem Rohrofeninneren nächsten Stegs (18'), gemessen von der der Rohrofenöffnung (10) zugewandten Begrenzungsfläche des der Rohrofenöffnung (10) nächsten Stegs (18) bis zu der dem Ofeninneren zugewandten Begrenzungsfläche des dem Ofeninneren nächsten Stegs (18') höchstens der Länge der der Rohrofenwand (14) zugekehrten Seite des breiteren Teils (2) des Probenträgers (1) entspricht
und daß
sich einer der Stege (18; 18') direkt an oder in geringem Abstand von der Rohrofenöffnung (10) befindet
und daß
die Seiten des breiteren Teils (2) des Probenträgers (1) in die Nuten (17; 17'; 17"; 17''') eingreifen und von ihrem, dem Ofeninneren zugekehrten Bereich ausgehend zu der Ofenöffnung (10) hin, an der der breitere Teil (2) des Probenträgers (1) beginnt, in der Weise keilförmig breiter oder dicker werden, daß der Probenträger (1) einerseits durch die Nuten (17; 17'; 17"; 17''') geführt und andererseits durch die durch die Form des breiteren bzw. dickeren Teils (2) des Probenträgers (1) bedingte Keilwirkung in den Nuten (17; 17'; 17"; 17"') mindestens des ofenöffnungsseitigen Stegs (18) durch einen festen Klemmsitz arretiert gehalten ist
und daß der schmalere Teil (3) des Probenträgers (1) freitragend im Abstand von der Innenwand (14) in den Innenraum des Rohrofens (9) bis mindestens unter die Bohrung (12) für die Einführung der Analysensubstanz hineinragt.

3. Rohrofen mit darin arretiertem Probenträger entsprechend Patentanspruch 2,
dadurch gekennzeichnet, daß
der Rohrofen (9) von einem Ende (10) aus betrachtet, in seinem ersten Drittel an der Innenwand (14) einen auf einer Umfangslinie umlaufenden Steg (18) hat, der in seinem unteren Drittel zwei Nuten (17; 17') aufweist, in denen der Probenträger (1) gehalten ist.

4. Rohrofen mit darin arretiertem Probenträger nach den Patentansprüchen 1, 2 und 3,
dadurch gekennzeichnet, daß
der Steigungswinkel (α), der die vom Inneren des Rohrofens (9) zum Rohrofenende (10) verlaufende Verbreiterung oder Verdickung der in die Nuten (13; 13'; 17; 17'; 17"; 17''') eingreifenden Seiten des breiteren Teils (2) des Probenträgers (1) definiert, im Bereich zwischen 2 und 4° liegt.

5. Rohrofen mit darin arretiertem Probenträger nach den Patentansprüchen 1, 2 und 3,
dadurch gekennzeichnet, daß
ein fester Klemmsitz des Probenträgers (1) in den Nuten (13; 13'; 17; 17'; 17", 17''') des Rohrofens (9) dadurch erreicht ist, daß entweder die Höhe oder die Tiefe der in der Wand (14) oder in den Stegen (18; 18') des Rohrofens (9) befindlichen Nuten (13; 13'; 17; 17'; 17"; 17''') von der endseitigen Ofenöffnung (10) ausgehend mit einem Neigungswinkel von 2 bis 4° kontinuierlich abnimmt und daß der Halteteil (2) des Probenträgers (1) nicht keilförmig ausgebildet ist.

6. Rohrofen mit darin arretiertem Probenträger nach den Patentansprüchen 1 bis 5,
dadurch gekennzeichnet, daß
die Nuten (13; 13'; 17; 17'; 17''; 17'''), in die der Probenträger (1) eingeschoben ist, keine Ecken aufweisen.

7. Rohrofen mit darin arretiertem Probenträger nach den Patentansprüchen 1 bis 6,
dadurch gekennzeichent, daß
die Nuten (13; 13'; 17; 17'; 17"; 17'''), in denen der Probenträger (1) gehalten ist, einen im wesentlichen runden, jedoch an der Basis, d.h. der unteren Auflagefläche des Probenträgers (1), in eine Waagerechte übergehenden und dem Ofeninneren zu offenen Querschnitt haben.

8. Rohrofen mit darin arretiertem Probenträger nach den Patentansprüchen 1, 2, 3, 4 und 5,
dadurch gekennzeichnet, daß
die Nuten (13; 13'; 17; 17'; 17"; 17'''), in denen der Probenträger (1) gehalten ist, einen mehreckigen Querschnitt haben, wobei die Winkel der Ecken größer 90° sind.

9. Rohrofen mit darin arretiertem Probenträger nach den Patentansprüchen 1 bis 8,
dadurch gekennzeichnet, daß
die in den Nuten (13; 13'; 17; 17'; 17"; 17''') befindlichen Bereiche der Seiten des Probenträgers (1) von den Nuten (13; 13'; 17; 17'; 17"; 17''') oben und unten mindestens zum Teil umgriffen werden.

10. Rohrofen mit darin arretiertem Probenträger nach den Patentansprüchen 1 bis 9,
dadurch gekennzeichnet, daß
die in die Nuten (13; 13'; 17; 17'; 17"; 17''') eingreifenden Seiten des Probenträgers (1) der Form der Nuten komplementär sind.

11. Rohrofen mit darin arretiertem Probenträger nach den Patentansprüchen 1 bis 9,
dadurch gekennzeichnet, daß
die in die Nuten (13; 13'; 17; 17'; 17"; 17''') eingreifenden Seiten des Probenträgers (1) so ausgeführt sind, daß sie nur entlang begrenzter Bereiche an den Flächen der Nuten anliegen.

12. Rohrofen mit darin arretiertem Probenträger nach den Patentansprüchen 1 bis 11,
dadurch gekennzeichnet, daß
der Probenträger (1) auf der dem Ofenende (10) zugekehrten Seite, in der sich die Nuten (13; 13'; 17; 17'; 17"; 17''') befinden, eine symmetrisch zu seiner mittleren Längsachse verlaufende, zu dem bezeichneten Ofenende (10) hin offene, U-förmige Aussparung (7) hat, so daß zwei Schenkel (6; 6') vorliegen, die eine gewisse Elastizität haben und die mindestens zum Teil mit ihren ofenwandseitigen Bereichen in den Nuten (13; 13'; 17; 17'; 17"; 17''') gelagert sind.

13. Rohrofen mit darin arretiertem Probenträger nach den Patentansprüchen 1, 4, 5, 6, 7, 8, 9, 10, 11 und 12,
dadurch gekennzeichnet, daß
die Länge der Nuten (13; 13') maximal 20 % der Länge des Rohrofens (9) beträgt.

14. Rohrofen mit darin arretiertem Probenträger nach den Patentansprüchen 2 bis 12,
dadurch gekennzeichnet, daß
die Zone im Rohrofen, in denen die Stege (18; 18') für die Aufnahme des Probenträgers (1) angeordnet sind, maximal 20 % der Länge des Rohrofens (9) beträgt.

15. Rohrofen mit darin arretiertem Probenträger nach den Patentansprüchen 1, 4, 5, 6, 7, 8, 9, 10, 11 und 12,
dadurch gekennzeichnet, daß
die Länge der Nuten (13; 13') maximal 15 % der Länge des Rohrofens beträgt.

16. Rohrofen mit darin arretiertem Probenträger nach den Patentansprüchen 2 bis 12,
dadurch gekennzeichnet, daß
die Zone im Rohrofen (9), in denen die Stege (18; 18') für die Aufnahme des Probenträgers (1) angeordnet sind, maximal 15 % der Länge des Rohrofens (9) beträgt.

17. Rohrofen mit darin arretiertem Probenträger nach den Patentansprüchen 1, 4, 5, 6, 7, 8, 9, 10, 11, 12, 13 und 15,
dadurch gekennzeichnet, daß
die Länge des breiteren Teils (2) des Probenträgers (1) der Länge der in der Ofenwand (14) befindlichen Nuten (13; 13') entspricht.

18. Rohrofen mit darin arretiertem Probenträger nach den Patentansprüchen 2, 4 bis 12, sowie 14 und 16,
dadurch gekennzeichnet, daß
die Länge des breiteren Teils (2) des Probenträgers (1) dem Abstand der Stege (18; 18'), gemessen von der der Rohrofenöffnung (10) zugewandten Begrenzungsfläche des der Rohrofenöffnung (10) näheren Stegs (18) bis zu der dem Ofeninneren zugewandten Begrenzungsfläche des dem Ofeninneren nächsten Stegs (18') entspricht.

19. Rohrofen mit darin arretiertem Probenträger nach den Patentansprüchen 1 bis 18,
dadurch gekennzeichnet, daß
der Probenträger (1) aus mit Pyrokohlenstoff oder Pyrographit beschichtetem Elektrographit besteht.

20. Rohrofen mit darin arretiertem Probenträger nach den Patentansprüchen 1 bis 19,
dadurch gekennzeichnet, daß
der Rohrofen (9) mit dem darin arretierten Probenträger (1), mindestens was den Innenbereich des Rohrofens (9) und den Probenträger (1) betrifft, mit Pyrokohlenstoff (21) beschichtet ist.

## Claims

1. Tubular furnace with sample carrier positively located therein and which is for the electrothermal atomization of analysis samples,
the tubular furnace having
a continuous bore in the centre region of the casing thereof for the introduction of the analysis substance into the furnace interior,
and
two grooves provided in the inner wall thereof for receiving the sample carrier, which grooves, proceeding from one of the two end openings of the tubular furnace, extend parallel to the central longitudinal axis of the tubular furnace and are arranged below an imaginary plane, which passes horizontally and centrally through the tubular furnace in its longitudinal extent, which grooves are in the half of the tubular furnace opposite or approximately opposite the bore for the feeding of the analysis substance and in which tubular furnace
the substantially flat, plate-like sample carrier is mounted in the grooves located on the inner wall of the tubular furnace and the sample carrier has at least one depression to receive the analysis substance, with this depression being arranged below the bore in the furnace casing which is intended for the feeding of the analysis substance,
characterized in that
the grooves (13; 13') to receive the sample carrier (1) proceed from an end opening (10) of the tubular furnace (9) and extend from there to a maximum length of a third of the length of the tubular furnace (9),
in that
the sample carrier (1) comprises a wider holding part (2), which is arranged in the vicinity of the end of the tubular-furnace opening (10) from which the grooves (13; 13') proceed and is fixed there in the grooves (13; 13'), and a narrower part (3) connected to this part (2), which part (3) is located in an unsupported manner at a distance from the inner wall (14) in the interior of the tubular furnace (9) below the bore (12) for the introduction of the analysis substance,
and in that
the sides of the wider part (2) of the sample carrier (1) engage the grooves (13; 13') and become wider or thicker in a wedge shape proceeding from their region facing the furnace interior towards the furnace opening (10) at which the wider part (2) of the sample carrier (9) begins in such a way that the sample carrier (1) is guided, on the one hand over the entire length of its wider region (2) through the grooves (13; 13') and on the other hand is supported by the wedge action in the grooves (13; 13'), positively located by a firm press fit, which wedge action is caused by the form of the wider or thicker part of the sample carrier (2).

2. Tubular furnace with sample carrier positively located therein and which is for the electrothermal atomization of analysis samples,
the tubular furnace having
a continuous bore in the centre region of the casing thereof for the introduction of the analysis substance into the furnace interior
and having
webs on the inner wall thereof in each case following a peripheral line, each web having two grooves which are arranged at the height of an imaginary plane which is located below the plane passing horizontally through the longitudinally extending centre line of the tubular furnace and parallel to this plane, and in which grooves the sample carrier is mounted in a position parallel to the longitudinal extent of the tubular furnace,
with
the substantially flat, plate-like sample carrier comprising a wider part, which is arranged in the vicinity of one of the two tubular-furnace openings and is fixed there in grooves of the webs, and a narrower part connected to this wider part and having at least one depression to receive the analysis substance, which part is mounted at a distance from the inner wall in the interior of the tubular furnace below the bore for the feeding of the analysis substance,
characterized in that
the tubular furnace (9), viewed from one end (10), has in its first third at the inner wall (14) at least two webs (18; 18') each following, with clearance from each other, a peripheral line, each web having in its lower third two grooves (17; 17' and 17"; 17''') in which the sample carrier (1) is supported
and in that
the spacing of the web (18) next to the tubular-furnace opening (10) from the web (18') next to the tubular-furnace interior, measured from the periphery of the web (18) next to the tubular-furnace opening (10),
which periphery faces the tubular-furnace opening (10), to the periphery of the web (18') next to the furnace interior, which periphery faces the furnace interior, corresponds at most to the length of the side of the wider part (2) of the sample carrier (1) which faces the tubular-furnace wall (14)
and in that
one of the webs (18; 18') is located directly at or at a small distance from the tubular-furnace opening (10) and in that
the sides of the wider part (2) of the sample carrier (1) engage into the grooves (17; 17'; 17"; 17''') and become wider or thicker in a wedge shape proceeding from their region facing the furnace interior, towards the furnace opening (10), at which the wider part (2) of the sample carrier (1) begins, in such a way that the sample carrier (1) on the one side is guided through the grooves (17; 17'; 17"; 17"') and on the other side is supported by the wedge action in the grooves (17; 17'; 17"; 17"') of at least the web (18) on the side of the furnace opening, positively located by a firm press fit, which wedge action is caused by the form of the wider or thicker part (2) of the sample carrier (1),
and in that the narrower part (3) of the sample carrier (1) projects in an unsupported manner with clearance from the inner wall (14) into the interior of the tubular furnace (9) to at least below the bore (12) for the introduction of the analysis substance.

3. Tubular furnace with sample carrier positively located therein corresponding to claim 2,
characterized in that
the tubular furnace (9), viewed from one end (10), has in its first third on the inner wall (14) a web (18) following a peripheral line, which web has in its lower third two grooves (17; 17') in which the sample carrier (1) is supported.

4. Tubular furnace with sample carrier positively located therein according to claims 1, 2 and 3,
characterized in that
the angle of inclination (α), which defines the widening or thickening of the sides of the wider part (2) of the sample carrier (1) which engage into the grooves (13; 13'; 17; 17'; 17"; 17"'), which widening or thickening extends from the interior of the tubular furnace (9) to the tubular-furnace end (10), lies in the range between 2 and 4°.

5. Tubular furnace with sample carrier positively located therein according to claims 1, 2 and 3,
characterized in that
a firm press fit of the sample carrier (1) in the grooves (13; 13'; 17; 17'; 17", 17"') of the tubular furnace (9) is achieved by either the height or the depth of the grooves (13; 13'; 17; 17'; 17"; 17"') located in the wall (14) or in the webs (18; 18') of the tubular furnace (9), proceeding from the end furnace opening (10), decreasing continuously with an angle of inclination of 2 to 4° and in that the supporting part (2) of the sample carrier (1) is not constructed in a wedge shape.

6. Tubular furnace with sample carrier positively located therein according to claims 1 to 5,
characterized in that
the grooves (13; 13'; 17; 17' 17" 17"'), into which the sample carrier (1) is pushed, do not have any corners.

7. Tubular furnace with sample carrier positively located therein according to claims 1 to 6,
characterized in that
the grooves (13; 13'; 17; 17'; 17"; 17"'), in which the sample carrier (1) is supported, have a substantially round cross section which, however, at the base, i.e. the lower supporting surface of the sample carrier (1), becomes horizontal and is open towards the furnace interior.

8. Tubular furnace with sample carrier positively located therein according to claims 1, 2, 3, 4 and 5,
characterized in that
the grooves (13; 13'; 17; 17'; 17"; 17'''), in which the sample carrier (1) is supported, have a polygonal cross section, with the angle of the corners being larger than 90°.

9. Tubular furnace with sample carrier positively located therein according to claims 1 to 8,
characterized in that
the regions of the sides of the sample carrier (1) located in the grooves (13; 13'; 17; 17'; 17"; 17"') are enclosed at least in part by the grooves (13; 13'; 17; 17'; 17"; 17"') at the top and bottom.

10. Tubular furnace with sample carrier positively located therein according to claims 1 to 9,
characterized in that
the sides of the sample carrier (1) engaging into the grooves (13; 13'; 17; 17'; 17"; 17"') complement the form of the grooves.

11. Tubular furnace with sample carrier positively located therein according to claims 1 to 9,
characterized in that
the sides of the sample carrier (1) engaging into the grooves (13; 13'; 17; 17'; 17"; 17''') are designed in such a way that they only abut the surfaces of the grooves along limited regions.

12. Tubular furnace with sample carrier positively located therein according to claims 1 to 11,
characterized in that
on the side facing the furnace end (10), in which the grooves (13; 13'; 17; 17'; 17"; 17"') are located, the sample carrier (1) has a U-shaped recess (7) extending symmetrically to the central longitudinal axis of the sample carrier and open towards the specified furnace end (10), so that there are two limbs (6; 6') which have a certain elasticity and which at least in part are mounted in the grooves (13; 13'; 17; 17'; 17"; 17"') with their regions which are on the side of the furnace wall.

13. Tubular furnace with sample carrier positively located therein according to claims 1, 4, 5, 6, 7, 8, 9, 10, 11 and 12,
characterized in that
the length of the grooves (13; 13') amounts to a maximum of 20% of the length of the tubular furnace (9) .

14. Tubular furnace with sample carrier positively located therein according to claims 2 to 12,
characterized in that
the zone in the tubular furnace in which the webs (18; 18') for receiving the sample carrier (1) are arranged, amounts to a maximum of 20% of the length of the tubular furnace (9).

15. Tubular furnace with sample carrier positively located therein according to claims 1, 4, 5, 6, 7, 8, 9, 10, 11 and 12,
characterized in that
the length of the grooves (13; 13') amounts to a maximum of 15% of the length of the tubular furnace.

16. Tubular furnace with sample carrier positively located therein according to claims 2 to 12,
characterized in that
the zone in the tubular furnace (9) in which the webs (18; 18') for receiving the sample carrier (1) are arranged, amounts to a maximum of 15% of the length of the tubular furnace (9).

17. Tubular furnace with sample carrier positively located therein according to claims 1, 4, 5, 6, 7, 8, 9, 10, 11, 12, 13 and 15,
characterized in that
the length of the wider part (2) of the sample carrier (1) corresponds to the length of the grooves (13; 13') located in the furnace wall (14).

18. Tubular furnace with sample carrier positively located therein according to claims 2, 4 to 12, as well as 14 and 16,
characterized in that
the length of the wider part (2) of the sample carrier (1) corresponds to the distance between the webs (18; 18'), measured from the periphery of the web (18) nearer to the tubular-furnace opening (10), which periphery faces the tubular-furnace opening (10), to the periphery of the web (18') next to the furnace interior, which periphery faces the furnace interior.

19. Tubular furnace with sample carrier positively located therein according to claims 1 to 18,
characterized in that
the sample carrier (1) consists of electrographite coated with pyrocarbon or pyrographite.

20. Tubular furnace with sample carrier positively located therein according to claims 1 to 19,
characterized in that
the tubular furnace (9) with the sample carrier (1) positively located therein is coated with pyrocarbon (21) at least as far as the inner region of the tubular furnace (9) and the sample carrier (1) are concerned.

## Revendications

1. Four tubulaire dans lequel est fixé un support d'échantillon pour l'atomisation électrothermique d'échantillons d'analyse comprenant :
un perçage traversant dans la zone centrale de l'enveloppe du four tubulaire pour l'introduction du produit d'analyse à l'intérieur du four,
deux rainures étant réalisées dans la paroi intérieure du four tubulaire pour recevoir le support d'échantillon, ces rainures s'étendant à partir de l'une des deux ouvertures frontales du four tubulaire, parallèlement à l'axe longitudinal médian du four tubulaire et elles sont situées en dessous d'un plan géométrique horizontal par rapport à l'extension longitudinale du four tubulaire, passant au milieu du perçage pour fournir la substance d'analyse par rapport ou sensiblement à la moitié opposée du four tubulaire
et le support d'échantillon essentiellement plat, en forme de plaquette, est logé dans les rainures réalisées dans la paroi intérieure du four tubulaire et le support d'échantillon comporte au moins une cavité pour recevoir la substance d'analyse, cette cavité se trouvant sous le perçage de l'enveloppe du four servant à l'introduction de la substance d'analyse,
caractérisé en ce que
les rainures (13, 13') recevant le support d'échantillon (1) partent d'une ouverture frontale (10) du four tubulaire (9) et s'étendent au maximum sur une longueur égale à un tiers de la longueur du four tubulaire (9),
le support d'échantillon (1) se compose d'une partie de fixation large (2) située au niveau de l'ouverture (10) à l'extrémité du four tubulaire à partir des rainures (13, 13'), en étant bloquée dans ces rainures (13, 13'), cette partie (2) se poursuivant par une partie plus étroite (3), en porte-à-faux, écartée de la paroi intérieure (14) à l'intérieur du four tubulaire (9) en dessous du perçage (12) servant à introduire la substance d'analyse,
les côtés de la partie large (2) du support d'échantillon (1) viennent prendre dans les rainures (13, 13') et partant de leur zone tournée vers l'intérieur du four en direction de l'ouverture (10) du four, là où commence la partie large (2) du support d'échantillon (9), s'élargissent ou s'épaississent en forme de coin et le support d'échantillon (1) est guidé d'une part sur toute la longueur de sa zone large (2) par les rainures (13, 13') et d'autre part par l'effet de coin créé par la partie plus large ou plus épaisse du support d'échantillon (2) dans les rainures (13, 13') assurant un blocage par effet de siège pressé.

2. Four tubulaire dans lequel est bloqué un support d'échantillon pour l'atomisation électrothermique d'échantillons d'analyse comprenant :
un perçage traversant la zone médiane de l'enveloppe du four tubulaire pour introduire la substance d'analyse à l'intérieur du four,
la paroi intérieure du four tubulaire ayant chaque fois sur une nervure périphérique d'un groupe de deux nervures située à la hauteur d'un plan fictif passant en dessous de la ligne d'axe longitudinale du plan traversant horizontalement le four tubulaire et parallèlement à celui-ci et recevant le support d'échantillon en position parallèle à la longueur du four tubulaire,
le support d'échantillon essentiellement plat en forme de plaquette se compose d'une partie large à proximité de l'une des deux ouvertures du four tubulaire en y étant bloquée et d'une partie étroite adjacente à la partie large, ayant au moins une cavité pour recevoir la substance d'analyse, ce support étant logé dans les rainures des nervures, en position écartée de la paroi intérieure, à l'intérieur du four tubulaire, en dessous du perçage pour l'introduction de la substance d'analyse,
caractérisé en ce que
le four tubulaire (9) considéré à partir d'une extrémité (10), comporte dans son premier tiers, au niveau de sa paroi intérieure (14), au moins deux nervures périphériques (18, 18') distantes l'une de l'autre, dont chacune comporte dans son tiers inférieur, deux rainures (17, 17' et 17", 17"') portant le support d'échantillon (1) et,
la distance de la nervure (18') la plus proche à l'intérieur du four tubulaire de la nervure (18) la plus proche de l'ouverture (10) du four, mesurée par rapport à la surface limite tournée vers l'ouverture (10), de la nervure (18) la plus proche de l'ouverture (10) du four, jusqu'à la surface limite tournée vers l'intérieur du four de la nervure (18') la plus proche de l'intérieur du four, correspond au maximum à la longueur du côté de la partie la plus large (2) du support d'échantillon (1) tournée vers la paroi (14) du four tubulaire et,
l'une des nervures (18, 18') se trouve directement au niveau de l'ouverture (10) du four ou à faible distance de celle-ci et,
les côtés de la partie large (2) du support d'échantillon (1) viennent prendre dans les rainures (17, 17' ; 17", 17"') et partant de leur zone tournée vers l'intérieur du four, en direction de l'ouverture (10), là où commence la partie large (2) du support d'échantillon (1), cette partie devient plus large ou plus épaisse en forme de coin et le support d'échantillon (1) est d'une part guidé par les rainures (17 ; 17'; 17" ; 17"') et d'autre part par l'effet de coin engendré par la forme de la paroi plus large ou plus épaisse (2) du support d'échantillon (1) dans les rainures (17 ; 17' ; 17"; 17"') au moins de la nervure (18) du côté de l'ouverture du four par un blocage par effet de coincement et,
la partie étroite (3) du support d'échantillon (1) pénétre en porte-à-faux en restant à distance de la paroi intérieure (14) à l'intérieur du four tubulaire (9) au moins jusque sous le perçage (12) servant à l'introduction de la substance d'analyse.

3. Four tubulaire dans lequel est bloqué un support d'échantillon selon la revendication 2,
caractérisé en ce que
le four tubulaire (9) considéré à partir de son extrémité (10), présente dans son premier tiers, sur sa paroi intérieure (14), une nervure (18) sur une ligne périphérique, ayant dans son tiers inférieur, deux rainures (17, 17') recevant le support d'échantillon (1).

4. Four tubulaire dans lequel est bloqué un support d'échantillon selon l'une des revendications 1, 2, 3,
caractérisé en ce que
l'angle de pente (α) de l'élargissement ou de l'épaississement allant de l'intérieur du four tubulaire (9) vers son extrémité (10), des côtés de la partie large (2) du support d'échantillon venant prendre dans les rainures (13 ; 13' 17 ; 17' ; 17" ; 17"') est compris entre 2° et 4°.

5. Four tubulaire dans lequel est bloqué un support d'échantillon selon l'une des revendications 1, 2, 3,
caractérisé en ce
qu'on réalise un siège serré, fixe du support d'échantillon (1) dans les rainures (13 ; 13' ; 17 ; 17' ; 17" ; 17"') du four tubulaire (9) en ce que soit la hauteur ou la profondeur des rainures (13 ; 13' ; 17 ; 17' ; 17" ; 17"') réalisées dans la paroi (14) ou dans les nervures (18, 18') du four tubulaire (9), partant de l'ouverture du four (10) du côté de l'extrémité, diminue de manière continue d'un angle de 2° à 4° et la partie de fixation (2) du support d'échantillon (1) n'est pas en forme de coin.

6. Four tubulaire dans lequel est bloqué un support d'échantillon selon l'une quelconque des revendications 1 à 5,
caractérisé en ce que
les rainures (13 ; 13" ; 17 ; 17' ; 17" ; 17"') dans lesquelles est glissé le support d'échantillon (1) ne comportent pas de coin.

7. Four tubulaire dans lequel est bloqué un support d'échantillon selon l'une des revendications 1 à 6,
caractérisé en ce que
les rainures (13 ; 13' ; 17 ; 17' ; 17" ; 17"'), dans lesquelles est tenu le support d'échantillon (1), ont une section essentiellement ronde mais qui rejoint néanmoins une direction horizontale à la base, c'est-à-dire à la surface d'appui inférieure du support d'échantillon (1) et ont une section ouverte vers l'intérieur du four.

8. Four tubulaire dans lequel est bloqué 2 un support d'échantillon selon l'une des revendications 1, 2, 3, 4, 5,
caractérisé en ce que
les rainures (13 ; 13' ; 17 ; 17', 17" ; 17"') recevant le support d'échantillon (1) ont une section polygonale, l'angle des coins étant supérieur à 90°.

9. Four tubulaire dans lequel est bloqué un support d'échantillon selon l'une des revendications 1 à 8,
caractérisé en ce que
les zones des côtés du support d'échantillon (1) qui se trouvent dans les rainures (13 ; 13' ; 17 ; 17' ; 17" ; 17"') sont entourées en haut et au moins en partie vers le bas par les rainures (13 ; 13' ; 17 ; 17' ; 17" ; 17"').

10. Four tubulaire dans lequel est bloqué un support d'échantillon selon l'une quelconque des revendications 1 à 9,
caractérisé en ce que
les côtés du support d'échantillon (1) venant prendre dans les rainures (13 ; 13' ; 17 ; 17' ; 17" ; 17"'), sont de forme complémentaire à celle des rainures.

11. Four tubulaire dans lequel est bloqué un support d'échantillon selon l'une quelconque des revendications 1 à 9,
caractérisé en ce que
les côtés du support d'échantillon (1) venant dans les rainures (13 ; 13' ; 17 ; 17' ; 17" ; 17"') sont réalisées pour ne s'appliquer qu'entre les surfaces des rainures que le long de zones limitées.

12. Four tubulaire dans lequel est bloqué un support d'échantillon selon l'une quelconque des revendications 1 à 11,
caractérisé en ce que
le support d'échantillon (1), sur son côté tourné vers l'extrémité du four (10), là où il y a des rainures (13 ; 13' ; 17 ; 17' ; 17" ; 17"'), présente une découpe (7) en forme de U, symétrique par rapport à son axe longitudinal médian, ouverte en direction de l'extrémité (10) du four pour former deux branches (6, 6') ayant une certaine élasticité et qui sont logées au moins en partie par leur zone tournée vers la paroi du four dans les rainures (13 ; 13' ; 17 ; 17' ; 17" ; 17"').

13. Four tubulaire dans lequel est bloqué un support d'échantillon les revendications 1, 4, 5, 6, 7, 8, 9, 10, 11, 12,
caractérisé en ce que
la longueur des rainures (13 ; 13') correspond au maximum à 20 % de la longueur du four tubulaire (9).

14. Four tubulaire dans lequel est bloqué un support d'échantillon selon l'une quelconque des revendications 2 à 12,
caractérisé en ce que
la zone du four tubulaire dans laquelle il y a des nervures (18, 18') pour recevoir le support d'échantillon (1) correspond au maximum à 20 % de la longueur du four tubulaire (9) .

15. Four tubulaire dans lequel est bloqué un support d'échantillon selon l'une quelconque des revendications 1, 4, 5, 6, 7, 8, 9, 10, 11, 12,
caractérisé en ce que
la longueur des rainures (13 ; 13') correspond au maximum à 15 % de la longueur du four tubulaire.

16. Four tubulaire dans lequel est bloqué un support d'échantillon selon l'une quelconque des revendications 2 à 12,
caractérisé en ce que
la zone du four tubulaire (9) dans laquelle se trouvent les nervures (18 ; 18') recevant le support d'échantillon (1) est au maximum égale à 15 % de la longueur du four tubulaire (9).

17. Four tubulaire dans lequel est bloqué un échantillon selon l'une quelconque des revendications 1, 4, 5, 6, 7, 8, 9, 10, 11, 12, 13, 15,
caractérisé en ce que
la longueur de la partie large (2) du support d'échantillon (1) correspond à la longueur des rainures (13 ; 13') de la paroi du four (14).

18. Four tubulaire dans lequel est bloqué un support d'échantillon selon l'une quelconque des revendications 2, 4 à 12 et 14 et 16,
caractérisé en ce que
la longueur de la partie large (2) du support d'échantillon (1) mesurée à partir de la surface limite du côté de l'ouverture (10), de la nervure (18) la plus proche de l'ouverture (10) jusqu'à la surface limite de la nervure suivante (18') à l'intérieur du four, pour sa surface tournée vers l'intérieur du four correspond à la distance des nervures (18 ; 18').

19. Four tubulaire dans lequel est bloqué un support d'échantillon selon l'une des revendications 1 à 18,
caractérisé en ce que
le support d'échantillon (1) est en électrographite revêtu de pyrocarbone ou de pyrographite.

20. Four tubulaire dans lequel est bloqué un support d'échantillon selon l'une des revendications 1 à 19,
caractérisé en ce que
le four tubulaire (9) dans lequel est bloqué le support d'échantillon (1) est revêtu de pyrocarbone (21) au moins pour la zone intérieure du four tubulaire (9) et le support d'échantillon (1).
